Europäisches Patentamt

European Patent Office

Office européen des brevets

(19)

(11) Veröffentlichungsnummer: **0 100 971**

**A1**

(12) ## EUROPÄISCHE PATENTANMELDUNG

(21) Anmeldenummer: 83107468.7

(22) Anmeldetag: 29.07.83

(51) Int. Cl.³: **F 16 H 55/56**

(30) Priorität: 06.08.82 US 405781

(43) Veröffentlichungstag der Anmeldung:
22.02.84 Patentblatt 84/8

(84) Benannte Vertragsstaaten:
DE FR GB

(71) Anmelder: DEERE & COMPANY
1 John Deere Road
Moline Illinois 61265(US)

(72) Erfinder: Walker, Donald Emerson
130 Summit Drive
Cedar Falls Iowa 50613(US)

(72) Erfinder: Clark, Gary Dean
1426 Ingersoll
Waterloo Iowa 50701(US)

(74) Vertreter: Feldmann, Bernhard
DEERE & COMPANY European Office, Patent
Department Steubenstrasse 36-42 Postfach 503
D-6800 Mannheim 1(DE)

(54) In ihrem wirksamen Durchmesser veränderbare Riemenscheibe.

(57) Eine in ihrem wirksamen Durchmesser veränderbare Riemenscheibe (10) besteht aus zwei axial unter der Wirkung einer Feder (38) verschiebbaren Scheibenhälften (24), die mit ihren Zylindernaben (26) auf einem Umlaufteil (12) drehbar und axial verschiebbar angeordnet sind, wobei über eine aus Stiften (22) und Führungsschlitzen (28) bestehende Zwangsführung jede Scheibenhälfte (24) bei einer Änderung des wirksamen Durchmessers auf dem Umlaufteil um den selben Betrag gedreht und axial verschoben wird.

EP 0 100 971 A1

In ihrem wirksamen Durchmesser veränderbare Riemenscheibe

Die Erfindung bezieht sich auf eine in ihrem wirksamen Durchmesser veränderbare Riemenscheibe mit zwei unter der Wirkung mindestens einer Feder axial verschiebbaren umlaufenden Scheibenhälften, die drehfest miteinander in Verbindung stehen.

In ihrem wirksamen Durchmesser veränderbare Riemenscheiben finden unter anderem für die Beibehaltung einer betriebsgerechten Riemenspannung oder für Riemengetriebe mit variabler Drehzahl Verwendung. Dabei ist in der Regel eine Scheibenhälfte axial unverschiebbar und die andere axial verschiebbar angeordnet (US-PS 2 045 870). Wird bei derartigen Riemenscheiben die Riemenspannung oder die Drehzahl geändert, dann verschiebt sich auch die Längsmittellinie des von der Riemenscheibe geführten Riemens in axialer Richtung, was zu einer Beeinträchtigung der Funktion führen kann.

Bei der Riemenscheibe, von der die Erfindung ausgeht (FR-PS 1 251 512), sind beide Riemenscheibenhälften axial verschiebbar, um den Riemen stets in seiner Längsebene zu halten. Dies soll über auf beide Scheibenhälften wirkende Federn erfolgen. Aber auch hier besteht die Gefahr, daß der Riemen sich aus seiner Längsebene axial bewegt, wenn die Federkräfte nicht entsprechend aufeinander abgestellt sind, oder wenn die Reibung zwischen einer Scheibenhälfte und dem sie lagernden Körper größer ist, als die auf die andere Scheibenhälfte einwirkende Reibung.

Die mit der Erfindung zu lösende Aufgabe wird darin gesehen, eine in ihrem wirksamen Durchmesser veränderbare Riemenscheibe derart auszubilden, daß eine Verschiebung der Längsmittelebene des von der Riemenscheibe geführten
Riemens ausgeschlossen ist.

Diese Aufgabe ist gemäß der Erfindung dadurch gelöst worden, daß jede Scheibenhälfte koaxial, drehbar und zwangsgeführt auf einem gemeinsamen Umlaufteil angeordnet ist. Auf diese Weise bewegen sich beide Scheibenhälften bei Änderung der Riemenspannung oder beispielsweise bei einer Veränderung der Drehzahl immer um den gleichen Betrag in axialer Richtung, so daß der Riemen stets in seiner ursprünglichen Längsmittelebene verbleibt.

Die Zwangsführung kann in einfacher Weise nach der Erfindung dadurch erreicht werden, daß jede Scheibenhälfte mit einer auf dem Umlaufteil drehbar und axial verschiebbar angeordneten Zylindernabe versehen ist, von denen jede wenigstens einen Führungsschlitz aufweist, in die sich mit dem Umlaufteil verbundene Nocken erstrecken. Zweckmäßig sind hierzu die Nocken als radial von dem Umlaufteil abstehende Stifte ausgebildet.

Dadurch, daß erfindungsgemäß die Führungsschlitze in einem spitzen Winkel mit Bezug auf die Längsmittellinie eines von der Riemenscheibe geführten Riemens angeordnet sind, wird sich bei einer Veränderung des wirksamen Durchmessers jede Scheibenhälfte um einen gleichen Betrag auf dem Umlaufteil drehen und gleichzeitig axial verschieben.

Vorteilhaft sind außerdem die Führungsschlitze mit Bezug auf die Längsmittellinie des von der Riemenscheibe geführten Riemens symmetrisch angeordnet.

Eine leichte Führung und Sicherung gegen Verunreinigungen, die aber eine betriebsgerechte Schmierung zuläßt, wird dadurch nach einem weiteren Merkmal der Erfindung erzielt, daß die Führungsschlitze über Führungsrollen auf den
Stiften geführt und abdeckbar sind.

Schließlich kann bei Verwendung nur einer auf eine Scheibenhälfte einwirkenden Feder eine Synchronbewegung bei einer
Riemenscheibe, bei der die drehfeste Verbindung der Scheibenhälften über mindestens einen Bolzen erfolgt, auf dem
eine Scheibenhälfte verschiebbar ist, dadurch in einfacher
Weise erreicht werden, daß der Bolzen mit der anderen
Scheibenhälfte axial verschiebbar ist.

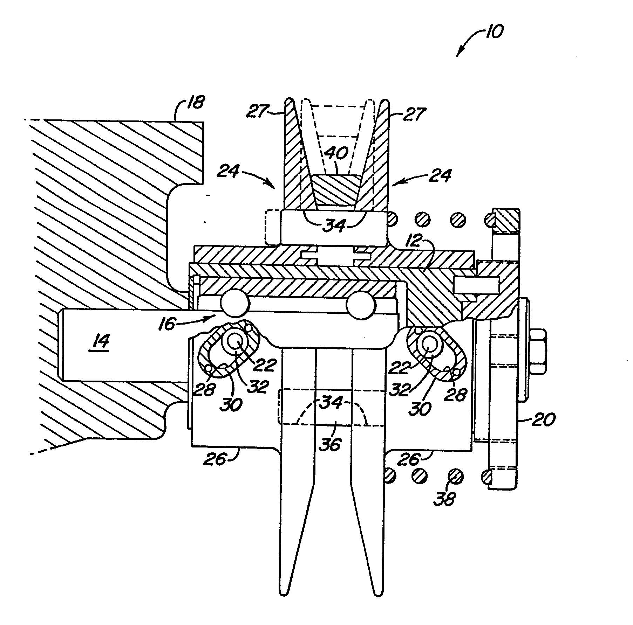

In der Zeichnung ist ein nachfolgend näher erläutertes Ausführungsbeispiel der Erfindung dargestellt.

Mit 10 ist in der Zeichnung eine in ihrem wirksamen Durchmesser veränderbare Riemenscheibe bezeichnet. Sie weist
unter anderem eine zylindrisch ausgebildete Hülse 12 auf,
die auf einer Welle 14 über ein Lager 16 drehbar aber
axial unverschiebbar angeordnet ist. Dabei ist die Welle
14 fest in einem Gehäuse 18, das als Gehäuse für den Antrieb eines Gebläses ausgestaltet sein kann, montiert,
und eine Nabe 20 steht mit dem hierzu geschlossen ausgebildeten Stirnende der Hülse 12 in Verbindung. Die Nabe
20 läuft damit mit der als Umlaufteil ausgebildeten Hülse
12 um und dient zur Aufnahme eines in der Zeichnung der
Einfachheit halber nicht weiter dargestellten Gebläses.
Mit der Hülse 12 sind des weiteren mehrere, auf ihrem Umfang verteilt angeordnete und zueinander axialen Abstand
aufweisende Stifte 22, von denen lediglich zwei in der
Zeichnung zu erkennen sind  und die von der Hülse radial
abstehen, fest verbunden.

Auf der Hülse 12 sind ferner zwei Scheibenhälften 24
drehfest aber axial verschiebbar angeordnet. Hierzu weisen die Scheibenhälften je eine Zylindernabe 26 und je einen mit Bezug auf die Hülse radial verlaufenden ringförmigen Scheibenteil 27 auf, so daß zwischen den einander zugewandten Scheibenteilen ein Riemen 40 geführt werden kann. Zur drehfesten aber axial verschiebbaren Anordnung der Scheibenhälften 24 ist jede Zylindernabe 26 mit mehreren schräg verlaufenden Führungsschlitzen 28 versehen, die von hochstehenden Kanten 30 umgeben sein können. In jedem Führungsschlitz 28 ragt ein Stift 22, und auf die Stifte aufgesetzte Führungsrollen 32 dienen dazu, daß die Führungsschlitze und damit die Scheibenhälften 24 sich auf der Hülse 12 axial verschieben und mit ihr umlaufen können. Zweckmäßig kann jeder Führungsschlitz 28 durch eine nicht dargestellte Schmiermittelkappe verschlossen werden, wodurch der Führungsschlitz mit Schmiermittel befüllt und verhindert werden kann, daß sich in den Führungsschlitzen Schmutzablagerungen bilden.

Die Führungsschlitze 28 in jeder Zylindernabe 26 sind mit Bezug auf die Drehachse der Hülse 12 und die der Scheibenhälften in einem spitzen Winkel angeordnet und alle Führungsschlitze in einer Zylindernabe sind zu den Führungsschlitzen in der anderen Zylindernabe symmetrisch, wobei die Symmetrieachse mit der Längsmittellinie des Riemens 40, der zwischen den Scheibenteilen 27 geführt ist, zusammenfällt.

In die Scheibenteile 27 sind noch zueinander ausgerichtete Bohrungen 34 eingearbeitet, die Bolzen 36 aufnehmen, über die ein Gleichlauf der Scheibenhälften 24 erreicht wird. Hierzu ist jeder Bolzen 36 in die Bohrung 34 eines Scheibenteils 27 fest eingesetzt, während zwischen der Bohrung 34 in dem anderen Scheibenteil 27 und dem Bolzen 36 Spiel herrscht, damit sich der andere Scheibenteil auf dem Bolzen axial verschieben kann.

Schließlich ist noch eine einzige Druckfeder 38 zwischen der Nabe 20 und der der Nabe zugelegenen Scheibenhälfte 27 vorgesehen, über die diese Scheibenhälfte in Richtung auf die andere Scheibenhälfte gedrückt wird.

Sobald nun die Spannung des Riemens 40 sich verändert, was beispielsweise durch eine nicht dargestellte Riemenspannvorrichtung erfolgen kann, werden die Scheibenhälften 24 sich auf der Hülse 12 infolge der Nockensteuerung leicht drehen und dabei axial um den gleichen Betrag symmetrisch verschieben. Dabei wird der Riemen 40 zwischen den Scheibenteilen 27 radial nach innen oder außen gleiten, wobei seine Längsmittellinie aber immer in derselben Ebene verbleibt. Die Anzahl der die Nockensteuerung ergebenden Stifte 22 und Führungsschlitze 28 ist dabei in Abhängigkeit von den von der Riemenscheibe zu übertragenden Kräften variabel.

Patentansprüche

1. In ihrem wirksamen Durchmesser veränderbare Riemenscheibe (10) mit zwei unter der Wirkung mindestens einer Feder (38) axial verschiebbaren umlaufenden Scheibenhälften (24), die drehfest miteinander in Verbindung stehen, dadurch gekennzeichnet, daß jede Scheibenhälfte (24) koaxial, drehbar und zwangsgeführt auf einem gemeinsamen Umlaufteil (12) angeordnet ist.

2. Riemenscheibe nach Anspruch 1, dadurch gekennzeichnet, daß jede Scheibenhälfte (24) mit einer auf dem Umlaufteil (12) drehbar und axial verschiebbar angeordneten Zylindernabe (26) versehen ist, von denen jede wenigstens einen Führungsschlitz (28) aufweist, in die sich mit dem Umlaufteil verbundene Nocken (22 und 32) erstrecken.

3. Riemenscheibe nach Anspruch 2, dadurch gekennzeichnet, daß die Nocken (22 und 32) als radial von dem Umlaufteil (12) abstehende Stifte (22) ausgebildet sind.

4. Riemenscheibe nach Anspruch 2, dadurch gekennzeichnet, daß die Führungsschlitze (28) in einem spitzen Winkel mit Bezug auf die Längsmittellinie eines von der Riemenscheibe (10) geführten Riemens (40) angeordnet sind.

5. Riemenscheibe nach einem oder mehreren der vorhergehenden Ansprüche, dadurch gekennzeichnet, daß die Führungs-schlitze (28) mit Bezug auf die Längsmittellinie des von der Riemenscheibe (10) geführten Riemens (40) symmetrisch angeordnet sind.

6. Riemenscheibe nach einem oder mehreren der vorherigen Ansprüche, dadurch gekennzeichnet, daß die Führungsschlitze (28) über Führungsrollen (32) auf den Stiften (22) geführt und abdeckbar sind.

7. Riemenscheibe nach Anspruch 1, wobei die drehfeste Verbindung der Scheibenhälften (24) über mindestens einen Bolzen (36) erfolgt, auf dem eine Scheibenhälfte (24) verschiebbar ist, dadurch gekennzeichnet, daß der Bolzen (36) mit der anderen Scheibenhälfte (24) axial verschieb-bar ist.

1/1

Europäisches
Patentamt

**0100971**
Nummer der Anmeldung

**EUROPÄISCHER RECHERCHENBERICHT**

EP 83 10 7468

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | CH-A- 470 607 (R. AMBROS) * Ganzes Dokument * | 1,7 | F 16 H 55/56 |
| A | | 4,5 | |
| | --- | | |
| X | US-A-3 270 578 (H.W. LEADBEATER) * Ganzes Dokument * | 1 | |
| | --- | | |
| A | US-A-2 541 766 (P. JEREB) * Ganzes Dokument * | 1-5 | |
| | --- | | |
| A | DE-A-1 909 183 (C.-G. HARD AF SEGERSTAD) * Ansprüche 1, 2, 3, 5; Figur 3 * | 1-5 | |
| | --- | | **RECHERCHIERTE SACHGEBIETE (Int. Cl. 3)** |
| A | FR-A-1 140 570 (D. PAPAGEORGES) * Ganzes Dokument * | 1-3,5 6 | F 16 H 55/00 |
| | --- | | F 16 H 9/00 |
| A | FR-A-1 106 748 (A. LOURIE et al.) | | F 16 H 11/00 |
| | ----- | | |

Der vorliegende Recherchenbericht wurde für alle Patentansprüche erstellt.

| Recherchenort BERLIN | Abschlußdatum der Recherche 28-09-1983 | Prüfer LEMBLE Y.A.F.M. |
|---|---|---|